# DEMANDE DE BREVET EUROPEEN

(11) **EP 1 067 015 A1**
(43) Date de publication de la demande: **10.01.2001**
(21) Numéro de dépôt: 00401945.1
(22) Date de dépôt: 06.07.2000
(51) Int. Cl.: B60N 2/427

(54) **Système de retenue pour un occupant de véhicule automobile**

(30) Priorité: 08.07.1999 FR 9908828
(71) Demandeur: Renault, 92100 Boulogne Billancourt (FR)
(72) Inventeur: Lecrosnier, Laurent, 78220 Guyancourt (FR)

(57) **Abrégé**

Système (10) de retenue d'un occupant (18) d'un siège (12) d'automobile comportant une ceinture de sécurité munie d'un brin (14) ventral, et comportant un élément (24) transversal agencé en dessous d'une face inférieure (26) d'une assise (20) du siège (12), qui est mobile verticalement entre un état de repos dans lequel il ne s'oppose pas à un écrasement de l'assise (20) et un état actif d'immobilisation au contact de la face inférieure (26) de l'assise (20) évitant, lors d'un choc, l'écrasement de l'assise (20) du siège (12) et le glissement de l'occupant (18) du siège (12) sous le brin ventral (14) de la ceinture, caractérisé en ce qu'il comporte des moyens de rappel élastique de l'élément (24) qui, dans la position de repos, le rappellent élastiquement au contact de la face inférieure (26) de l'assise (20) et des moyens de verrouillage commandés qui, dans l'état actif, le verrouillent au contact de la face inférieure (26) de l'assise (20).

## Description

L'invention concerne une système de retenue pour un occupant d'un siège de véhicule automobile.

L'invention concerne plus particulièrement un système de retenue pour un occupant d'un siège de véhicule automobile, du type qui comporte une ceinture de sécurité associée au siège qui comporte au moins un brin ventral, et un élément sensiblement transversal, qui est agencé en dessous d'une face inférieure d'une assise souple horizontale du siège et qui est mobile verticalement entre un état de repos dans lequel il ne s'oppose pas à un jeu d'écrasement de l'assise souple du siège et un état actif dans lequel il est immobilisé au contact de la face inférieure de l'assise comprimée du siège pour éviter, notamment lors d'un choc, que l'écrasement de l'assise du siège ne permette à l'occupant du siège de glisser sous le brin ventral de la ceinture de sécurité.

On connaît de nombreux exemples de système de retenue de ce type, aussi appelés systèmes "d'anti sous-marinage".

Selon une première conception connue décrite dans le document US-A-5.125.472, on a proposé un système de retenue qui comporte un élément en forme de plaque qui est agencé en dessous d'une face inférieure d'une assise souple horizontale du siège, qui est articulé autour d'un axe transversal, et qui est mobile sensiblement verticalement par rotation autour de son axe entre un état de repos dans lequel il est agencé parallèlement au plan général horizontal de l'assise, et un état actif dans lequel il est pivoté d'un angle important et il est immobilisé au contact de la face inférieure de l'assise du siège pour déformer l'assise souple de façon qu'une partie de celle-ci remonte en saillie sous les cuisses de l'occupant et évite, en cas de choc, le glissement de l'occupant sous le brin ventral de la ceinture de sécurité.

Selon une deuxième conception connue, on a proposé un système qui comporte un élément formé d'une barre transversale, qui est agencée en dessous d'une face inférieure d'une assise souple horizontale du siège et qui est mobile verticalement le long de deux rails verticaux parallèles, entre un état de repos bas dans lequel la barre est liée à un plancher du véhicule par des agrafes destructibles et un état actif dans lequel elle est amenée au contact de la face inférieure de l'assise du siège par des moyens pyrotechniques pour éviter, notamment lors d'un choc, que l'écrasement de l'assise du siège ne permette au passager de glisser sous le brin ventral de la ceinture de sécurité.

Ces deux conceptions résultent d'un compromis entre le confort et la sécurité de l'occupant du siège.

En effet, en configuration normale de roulage du véhicule, pour garantir à l'occupant du siège un confort satisfaisant lorsqu'il est assis sur le siège, l'élément ne peut être verrouillé au contact de la face inférieure de l'assise du siège. Si tel était le cas, l'élément mobile constituerait un "point dur" dans l'assise du siège, et il en résulterait un inconfort notable pour l'occupant.

Pour cette raison, l'élément est mobile et n'occupe sa position active qu'en cas de choc.

Le déplacement de l'élément de sa position de repos à sa position active est obtenu très rapidement à l'aide de moyens pyrotechniques qui provoquent une remontée rapide de celui-ci.

L'inconvénient de tels moyens pyrotechniques est qu'ils sont coûteux car ils doivent être à même de déplacer l'élément mobile qui est relativement volumineux.

Pour remédier à cet inconvénient, l'invention propose un système de retenue dans lequel, en configuration normale de roulage du véhicule, l'élément mobile est pré-positionné au contact de la face inférieure de l'assise du siège, mais n'est pas verrouillé.

Dans ce but, l'invention propose un système de retenue du type décrit précédemment, caractérisé en ce qu'il comporte des moyens de rappel élastique de l'élément qui, dans la position de repos, le maintiennent élastiquement au contact de la face inférieure de l'assise comprimée du siège et des moyens de verrouillage commandés qui, dans l'état actif, le verrouillent au contact de la face inférieure de l'assise comprimée du siège.

Selon d'autres caractéristiques de l'invention:
- le système de retenue comporte deux flasques d'assise, verticaux et d'orientation longitudinale, solidaires du siège, dont des lumières verticales reçoivent chacune une extrémité transversale de l'élément conformée en pion de guidage,
- les moyens de rappel élastique de l'élément comportent au moins un ressort axial vertical, qui est interposé entre une patte horizontale d'un flasque qui est agencée sous la lumière correspondante et une partie du pion de guidage associé de l'élément qui fait saillie hors de la lumière,
- les moyens commandés de verrouillage de l'élément comportent au moins une gâche mobile en forme d'une plaque qui est susceptible de coulisser longitudinalement parallèlement à l'un des flasques, et qui comporte, agencées verticalement, une série d'encoches qui sont chacune d'une forme complémentaire de celle de la partie en saillie du pion associé, pour verrouiller verticalement l'élément au contact de la face inférieure de l'assise du siège,
- les moyens de verrouillage commandés comportent des moyens électroniques qui commandent un actionneur provoquant le mouvement de coulissement longitudinal de la gâche mobile entre l'état de repos dans lequel la gâche est en retrait de la partie en saillie du pion, et l'état actif dans lequel la gâche est déplacée en coulissement par l'actionneur pour recevoir le pion dans une de ses encoches,
- les moyens électroniques comportent des moyens de détection de la présence de l'occupant sur le siège, d'un état de marche du véhicule, et/ou d'un choc subi par le véhicule,
- les moyens électroniques commandent l'actionneur provoquant le mouvement de la gâche suivant l'état actif dès lors que l'occupant est assis sur le siège et que le véhicule est en marche,
- l'actionneur est un actionneur électromagnétique,
- les moyens électroniques ne commandent l'actionneur provoquant le mouvement de la gâche suivant l'état actif que si le véhicule subit un choc,
- l'actionneur est un actionneur pyrotechnique commandé par les moyens électroniques.

D'autres caractéristiques et avantages de l'invention apparaîtront à la lecture de la description détaillée qui va suivre pour la compréhension de laquelle on se reportera aux dessins annexés dans lesquels :
- la figure 1 est une vue en coupe transversale d'un système de retenue selon l'état de la technique représenté en position de repos ;
- la figure 2 est une vue selon la figure 1 du système de retenue selon l'état de la technique représenté en position de active ;
- la figure 3 est une en perspective éclatée d'un système de retenue selon l'invention représenté en position de repos ;
- la figure 4 est une vue longitudinale en bout du système de retenue selon un premier mode de réalisation de l'invention représenté en position de repos avant que l'occupant du siège ne s'asseye ;
- la figure 5 est une vue selon la figure 3 du système de retenue selon le premier mode de réalisation de l'invention représenté en position de repos après que l'occupant du siège se soit assis ;
- la figure 6 est une vue selon la figure 3 du système de retenue selon le premier mode de réalisation de l'invention représenté en position active ;
- la figure 7 est une vue selon la figure 3 du système de retenue selon un second mode de réalisation de l'invention représenté en position de repos après que l'occupant du siège se soit assis ; et
- la figure 8 est une vue selon la figure 3 du système de retenue selon le second mode de réalisation de l'invention représenté en position active ;

Dans la description qui va suivre, des chiffres de référence identiques désignent des éléments identiques ou ayant des fonctions similaires.

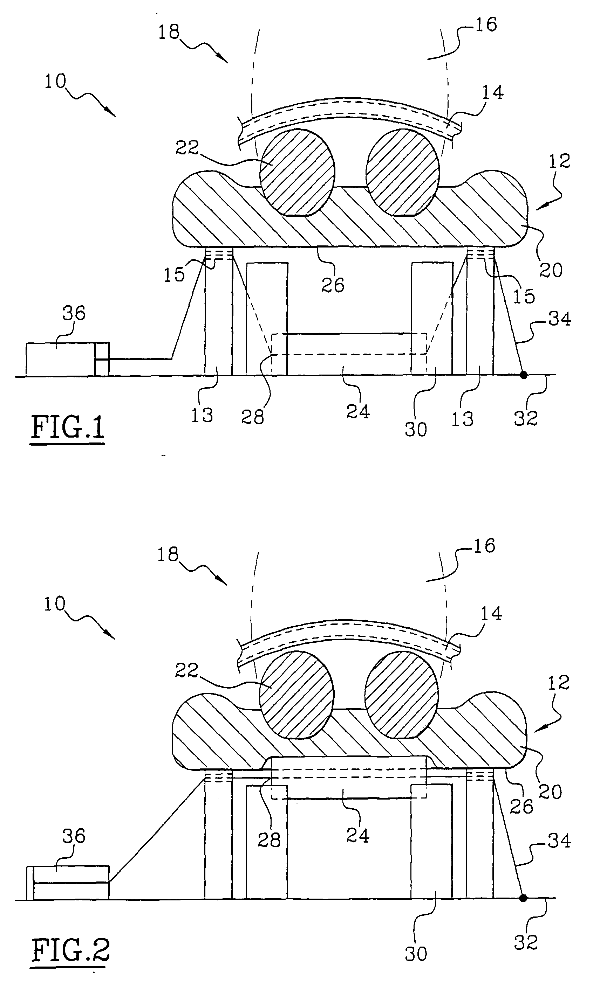

On a représenté aux figures 1 et 2 l'ensemble d'un système de retenue 10 pour un occupant d'un siège 12 de véhicule automobile réalisé conformément à l'état de la technique.

De manière connue, le siège 12 est associé à une ceinture de sécurité qui comporte au moins brin ventral 14 pour, en cas de choc subit par le véhicule, retenir le buste 16 d'un passager 18.

Le passager 18 repose sur une assise 20 du siège 12 notamment par l'intermédiaire de ses cuisses 22.

L'assise 20 du siège 12 est, pour d'évidentes raisons de confort, réalisée en un matériau souple qui est susceptible, notamment en cas de choc, de s'écraser et de se déformer suivant la direction verticale, de sorte que l'impact du véhicule pourrait projeter le passager 18 sous le brin ventral 14 de la ceinture de sécurité lorsque le poids du passager 18 écrase l'assise souple 20 du siège 12.

Pour éviter que, en cas de choc du véhicule, l'impact ne conduise le buste 16 de l'occupant du siège 12 à passer sous le brin ventral 14 de la ceinture, le système de retenue 10 comporte un élément sensiblement transversal, notamment une barre 24, qui est agencé en dessous d'une face intérieure 26 de l'assise 20 du siège 12, et qui est montée mobile verticalement entre un état de repos, qui représenté à la figure 1 et dans lequel il ne s'oppose pas à l'écrasement de l'assise 20 souple du siège 12, et un état actif, qui est représenté à la figure 2 et dans lequel il est immobilisé au contact de la face inférieure 26 de l'assise 20 du siège 12 pour éviter le glissement des cuisses 22 et du buste 16 du passager 18 sous le brin ventral 14 de la ceinture de sécurité.

Selon l'état de la technique, la barre 24 est montée coulissante à ses extrémités 28 entre deux flasques latéraux verticaux 30. Dans la position de repos représentée à la figure 1, la barre 24 est agencée au contact d'un plancher 32 du véhicule. La barre 24 est par exemple retenue contre ce plancher 22 par des agrafes (non représentées) ou tout autre moyen destructible d'immobilisation.

La barre 24 est traversée par un câble 34 dont une extrémité est liée au plancher 32 du véhicule et dont l'autre extrémité est liée à un actionneur pyrotechnique 36 qui peut tirer le câble 34. Le câble 34 traverse aussi des montants 13 du siège 12 au travers de perçages 15 qui sont localisés transversalement immédiatement en dessous de la face inférieure 26 de l'assise 20 de façon que la tension du câble 34 provoque la remontée de la barre 24 coaxialement avec ces perçages 15 au contact de la face inférieure 26 de l'assise 20.

De la sorte, dans la configuration de la figure 1, la barre 24 est en état de repos, le câble 34 n'est pas tendu, et la barre 24 repose sur le plancher 32 du véhicule sans interférer avec l'assise 20 du siège 12.

Dans la configuration représentée à la figure 2 qui correspond au cas où le véhicule subit un choc, des moyens électroniques (non représentés) commandent l'actionnement de l'actionneur pyrotechnique 36 de façon que celui-ci tende le câble 34, ce qui provoque la remontée rapide de la barre 24 au contact de la face inférieure 26 de l'assise 20 souple et s'oppose à l'écrasement de cette assise 20 pour éviter que l'occupant 18 du siège 12 ne glisse sous le brin ventral 14 de la ceinture de sécurité.

Cette conception présente l'inconvénient de nécessiter une course verticale importante de la barre 24 de sa position de repos vers sa position active.

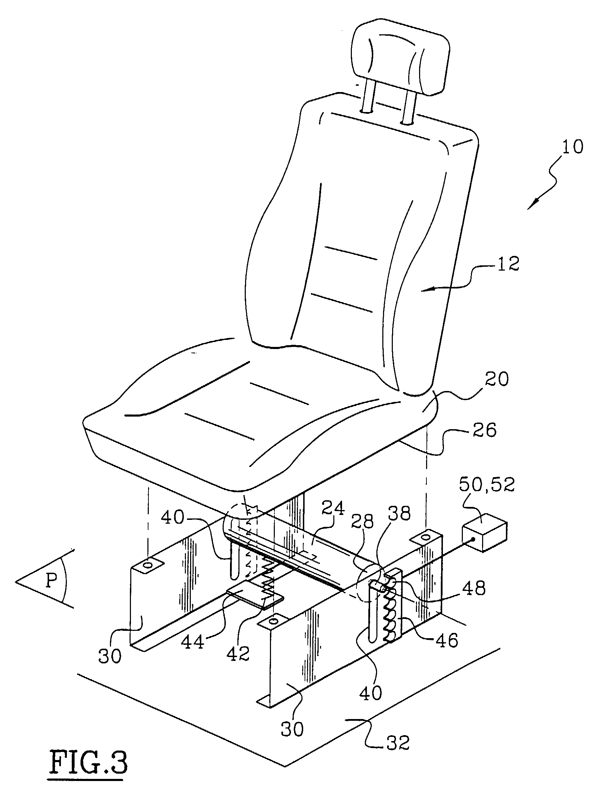

Pour remédier à cet inconvénient, l'invention propose un système de retenue qui est représenté aux figures 3 à 8.

Comme l'illustre la figure 3, le système de retenue 10 selon l'invention comporte, d'une façon analogue à l'état antérieure de la technique, un siège 12 dont l'assise 20 repose par l'intermédiaire de sa face inférieure 26 sur deux flasques longitudinaux verticaux 30 qui sont solidaires du plancher 32 du véhicule.

La face inférieure 26 et les parties supérieures des flasques verticaux 30 délimitent un plan P qui est associé à la face inférieure 26 de l'assise 20.

La barre transversale 24 est, conformément à l'invention, rappelée élastiquement dans la position de repos au contact de la face inférieure 26 de l'assise 20 du siège 12, c'est à dire que sa partie supérieure affleure le plan P. Les moyens de verrouillage commandés sont susceptibles de la verrouiller dans l'état actif au contact de la face inférieure 26 de l'assise du siège, c'est à dire dans le plan P.

Conformément à l'invention, les extrémités 28 de la barre transversale 24 comportent des pions axiaux 38, qui traversent des lumières 40 verticales agencées dans les flasques 30, pour guider verticalement les déplacements de la barre 24.

La barre 24 est rappelée élastiquement vers le haut par au moins un ressort axial vertical 42 qui est interposé entre une patte horizontale 44, solidaire d'un des flasques 30, et la barre 24. Dans le mode de réalisation préféré de l'invention, la barre est rappelée élastiquement par deux ressorts 42 opposés transversalement, mais pour des raisons de simplification de la présentation, les figures ne comportent qu'un ressort 42.

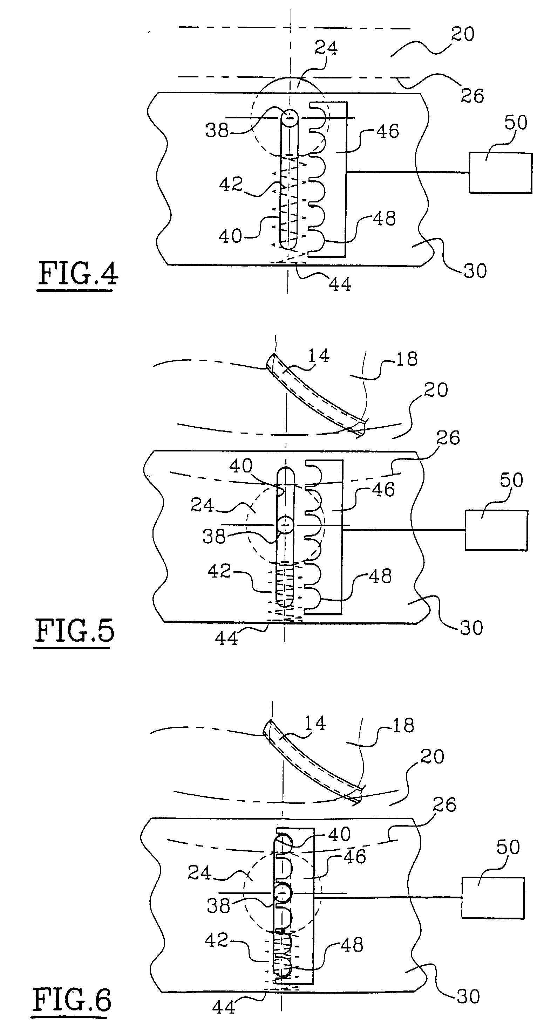

De la sorte, comme l'illustre la figure 4, la barre 24 peut, en l'absence d'occupant sur l'assise 20 du siège, occuper la position de repos dans laquelle la barre 24 occupe une position supérieure extrême. Dans cette position, les pions 38 sont en butée en haut des lumières 40. La barre 24 est alors au contact de la face inférieure 26 de l'assise 20.

Lorsque, comme l'illustre la figure 5, l'occupant 18 prend place sur l'assise 20 du siège 12, celle-ci se déforme et la face inférieure 26 de l'assise 20 repousse la barre 24 à l'encontre du ressort 28 en le comprimant, mais la barre 24 reste au contact de la face inférieure 26 de l'assise 20.

Avantageusement, la position de repos obtenue à l'aide du système de retenue selon l'invention est une position de repos "mobile" qui permet de maintenir la barre 24 au contact de la face intérieure 26 de l'assise 20 du siège 12 sans que celui-ci ne présente de " point dur" qui serait inconfortable pour l'occupant 18 du siège 12.

Comme l'illustre la figure 3, les moyens commandés de verrouillage de l'élément 24 comportent au moins une gâche 46 mobile qui est réalisée sous la forme d'une plaque. Cette gâche 46 est susceptible de coulisser longitudinalement parallèlement à l'un des flasques 30 et comporte, agencée verticalement, une série d'encoches 48 qui sont chacune d'une forme complémentaire de la partie en saillie du pion 38 qui fait saillie hors de la lumière 40 associée. Ces encoches 48 permettent, dans la position active du système de retenue 10, de verrouiller verticalement la barre 24 dans sa position de contact avec la face inférieure 26 de l'assise 20 du siège 12.

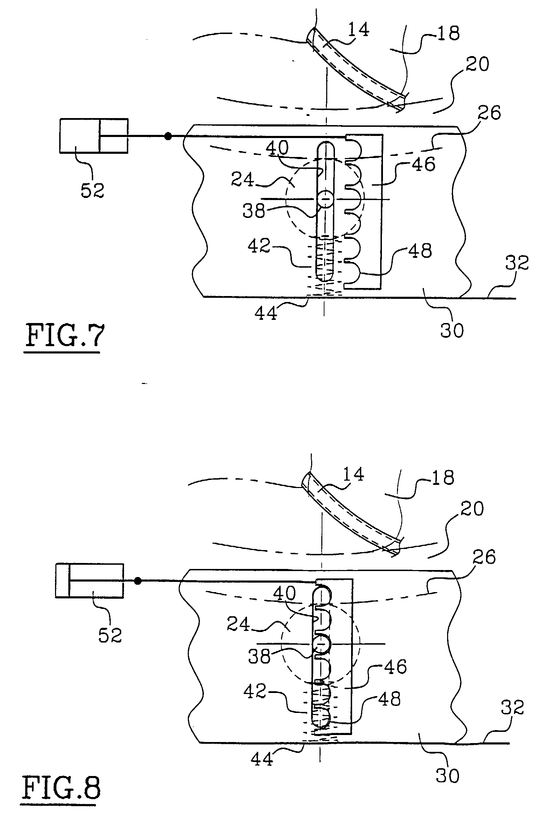

Les figures 4 à 6 illustrent un premier mode de réalisation de l'invention dans lequel des moyens électroniques commandent un actionneur, notamment un actionneur électromagnétique 50 qui provoque le coulissement longitudinal de la gâche 46, et les figures 7 et 8 illustrent un second mode de réalisation de l'invention dans lequel les moyens électroniques (non représentés) commandent un actionneur 52, notamment un actionneur pyrotechnique qui provoque le coulissement de la gâche 46 de façon que ses encoches 48 reçoivent le pion 28 pour verrouiller la barre 24.

Selon les deux modes de réalisation de l'invention, les moyens électroniques (non représentés) comportent des moyens de détection de la présence de l'occupant 18 sur le siège 12, d'un état de marche du véhicule, et/ou d'un choc subit par le véhicule. Toutefois, les deux modes de réalisation sont associés à deux fonctionnements différents des moyens électroniques.

Dans le premier mode de réalisation qui est représenté aux figures 4 à 6, les moyens électroniques commandent l'actionneur électromagnétique 50 de façon que celui-ci provoque le mouvement de verrouillage de la gâche 46 dès lors que l'occupant 18 est assis sur le siège 12. Cette configuration est représentée plus particulièrement à la figure 6. De la sorte, dès que le véhicule est en marche et que l'occupant est assis sur le siège, l'actionneur électromagnétique actionne la gâche 46 de verrouillage de la barre 24, laquelle s'oppose à tout écrasement ultérieur, notamment du fait d'un choc, de l'assise 20 du siège. La barre 24 joue alors un rôle " d'anti sous-marinage" de l'occupant 18 du siège 12.

Dans le second mode de réalisation de l'invention, qui est représenté aux figures 7 et 8, les moyens électroniques ne commandent l'actionneur 52, qui provoque le mouvement de la gâche 56, que si le véhicule subit un choc.

Ainsi, comme l'illustre la figure 7, suivant une configuration normale de roulage du véhicule, lorsque l'occupant 18 est assis sur l'assise 20 du siège 12, la barre 24 est constamment libre de se déplacer verticalement, par exemple en réponse aux forces d'inerties verticales de l'occupant 18 lorsque le véhicule subit des cahots ou de très fortes irrégularités dues à l'état de la route. Dans ce second mode de réalisation, lorsque le véhicule subit un choc, l'actionneur pyrotechnique 52 tire très rapidement la gâche 46 vers le pion 38 de la barre 24 de sorte que celui-ci est quasiment instantanément amené à pénétrer dans une des encoches 48 de la gâche 46.

Ce second mode de réalisation est particulièrement avantageux car il permet de bénéficier d'un siège 12 présentant un niveau de confort optimal pour l'occupant du siège 12, tout en offrant un temps de réaction extrêmement rapide du fait de la présence de l'actionneur pyrotechnique 52.

Enfin, dans les deux modes de réalisation de l'invention, les encoches 48 de la gâche 46 sont avantageusement conformées de façons à présenter un profil d'introduction (non représenté) qui force le pion 38 de la barre 24 à pénétrer dans une des encoches 46 ce qui prévient ainsi tous risque d'un défaut de verrouillage du pion 38 dans la gâche 48.

## Revendications

1. Système (10) de retenue pour un occupant (18) d'un siège (12) de véhicule automobile, du type qui comporte une ceinture de sécurité associée au siège (12) qui comporte au moins un brin (14) ventral, et un élément (24) sensiblement transversal, qui est agencé en dessous d'une face inférieure (26) d'une assise (20) souple horizontale du siège (12) et qui est mobile verticalement entre un état de repos dans lequel il ne s'oppose pas'à un jeu d'écrasement de l'assise (20) souple du siège (12) et un état actif dans lequel il est immobilisé au contact de la face inférieure (26) de l'assise (20) comprimée du siège (12) pour éviter, notamment lors d'un choc, que l'écrasement de l'assise (20) du siège (12) ne permette à l'occupant (18) du siège (12) de glisser sous le brin ventral (14) de la ceinture de sécurité,
caractérisé en ce qu'il comporte des moyens de rappel élastique de l'élément (24) qui, dans la position de repos, le maintiennent élastiquement au contact de la face inférieure (26) de l'assise (20) comprimée du siège (12) et des moyens de verrouillage commandés qui, dans l'état actif, le verrouillent au contact de la face inférieure (26) de l'assise (20) du siège (12).

2. Système de retenue (10) selon la revendication précédente, caractérisé en ce qu'il comporte deux flasques (30) d'assise, verticaux et d'orientation longitudinale, solidaires du siège (12), dont des lumières (40) verticales reçoivent chacune une extrémité (28) transversale de l'élément (24) conformée en pion (38) de guidage.

3. Système de retenue (10) selon la revendication précédente, caractérisé en ce que les moyens de rappel élastique de l'élément (24) comportent au moins un ressort (42) axial vertical, qui est interposé entre une patte (44) horizontale d'un flasque (30) qui est agencée sous la lumière (40) correspondante et une partie du pion (38) de guidage associé de l'élément (24) qui fait saillie hors de la lumière (40).

4. Système de retenue (10) selon la revendication précédente, caractérisé en ce que les moyens commandés de verrouillage de l'élément (24) comportent au moins une gâche (46) mobile en forme d'une plaque qui est susceptible de coulisser longitudinalement parallèlement à l'un des flasques (30), et qui comporte, agencées verticalement, une série d'encoches (48) qui sont chacune d'une forme complémentaire de celle de la partie en saillie du pion (38) associé, pour verrouiller verticalement l'élément (24) au contact de la face inférieure (46) de l'assise (20) du siège (12).

5. Système de retenue (10) selon la revendication précédente, caractérisé en ce que les moyens de verrouillage commandés comportent des moyens électroniques qui commandent un actionneur (50, 52) provoquant le mouvement de coulissement longitudinal de la gâche (46)mobile entre l'état de repos dans lequel la gâche (46) est en retrait de la partie en saillie du pion (38), et l'état actif dans lequel la gâche (46) est déplacée en coulissement par l'actionneur (50,52) pour recevoir le pion (38) dans une de ses encoches (46).

6. Système de retenue (10) selon la revendication précédente, caractérisé en ce que les moyens électroniques comportent des moyens de détection de la présence de l'occupant (18) sur le siège (12), d'un état de marche du véhicule, et/ou d'un choc subi par le véhicule.

7. Système de retenue (10) selon la revendication précédente, caractérisé en ce que les moyens électroniques commandent l'actionneur (50) provoquant le mouvement de la gâche (46) suivant l'état actif dès lors que l'occupant (18) est assis sur le siège (12) et que le véhicule est en marche.

8. Système de retenue (10) selon la revendication 7, caractérisé en ce que l'actionneur (50) est un actionneur électromagnétique.

9. Système de retenue (10) selon la revendication 6, caractérisé en ce que les moyens électroniques ne commandent l'actionneur (52) provoquant le mouvement de la gâche (46) suivant l'état actif que si le véhicule subit un choc.

10. Système de retenue (10) selon la revendication 9, caractérisé en ce que l'actionneur (52) est un actionneur pyrotechnique commandé par les moyens électroniques.
